# EUROPÄISCHE PATENTSCHRIFT

(11) **EP 4 112 513 B1**
(45) Veröffentlichungstag und Bekanntmachung des Hinweises auf die Patenterteilung: **29.05.2024**
(21) Anmeldenummer: 21182380.2
(22) Anmeldetag: 29.06.2021
(51) Int. Cl.: B65G 1/04, B66F 9/06, B66F 9/08, B66F 9/14, B65G 47/90

(54) **SYSTEM MIT EINEM GREIFER**
SYSTEM WITH A GRIPPER
SYSTÈME DOTÉ D'UN DISPOSITIF D'APPRÉHENSION

(43) Veröffentlichungstag der Anmeldung: 04.01.2023
(73) Patentinhaber: Schiller Automatisierungstechnik GmbH, 94486 Osterhofen (DE)
(72) Erfinder: FRÖHLICH, Tim, 70771 Leinfelden-Echterdingen (DE); BENTELE, Jonas, 70565 Stuttgart (DE); Weisshardt, Florian, 71272 Renningen (DE)
(74) Vertreter: König Szynka Tilmann von Renesse Patentanwälte Partnerschaft mbB München

(56) Entgegenhaltungen:
- WO-A1-2021/014377
- WO-A1-2021/111038
- CN-A- 109 132 956
- CN-A- 111 017 796
- FR-A1- 2 878 238

## Beschreibung

Die vorliegende Erfindung betrifft ein System mit einem Greifer zum Aufnehmen eines Gegenstands.

Bei dem Gegenstand kann es sich insbesondere um eine Box oder Kiste handeln, die bspw. in der Produktion oder auch Logistik zum Transportieren oder Lagern eines Objekts genutzt werden kann. Da die Lagerung der Kisten bzw. Boxen vielfach in Regalen erfolgt, richtet sich der vorliegende Gegenstand auch insbesondere auf das Aufnehmen aus einem Regalfach. Dies soll ein bevorzugtes Anwendungsgebiet illustrieren, den Gegenstand aber zunächst nicht in seiner Allgemeinheit beschränken.

In der WO 2021/014377 A1 ist ein Greifer offenbart, der die im Oberbegriff des Anspruchs 1 genannten Merkmale aufweist und der von oben kommend insbesondere loses Material greifen soll, in dem dieses mit einem ersten Elementpaar komprimiert wird und mit einer Mehrzahl Ketten von unten getragen wird.

In der FR 2 878 238 A1 ist ein Greifer in der Form eines Käfigs gezeigt, mit einem Boden, der aus einem Rollensystem besteht, und einem seitlich beweglichen Element zum Greifen.

Weiterhin zeigt die CN 111 017 796 A ein Greifersystem zum Einsatz in einem Bücherregal, welches Bücher aus einem Regal aufnehmen, rotieren und wieder zurückstellen soll, wofür es mit einer Reihe von Aktuatoren ausgestattet ist.

Der vorliegenden Erfindung liegt das technische Problem zugrunde, ein vorteilhaftes System mit einem Greifer zum Aufnehmen eines Gegenstands anzugeben. Dies wird erfindungsgemäß mit dem System gemäß Anspruch 1 gelöst. Dieses weist ein laterales Verstellelement auf, an dem ein erstes und ein zweites Klemmelement angeordnet sind. Deren in einer Breitenrichtung als kleinerster Abstand genommener Relativabstand kann mit dem lateralen Verstellelement verstellt werden, die Klemmelemente können damit also aufeinander zu oder voneinander weg bewegt werden. Ferner weist der Greifer eine Stützvorrichtung auf, die in einer zu dieser Breitenrichtung senkrechten Tiefenrichtung ausfahrbar ist. Mit diesem Greifer kann der Gegenstand zunächst durch Verringerung des Relativabstands zwischen den Klemmelementen eingeklemmt werden.

Wie nachstehend im Einzelnen diskutiert, kann der eingeklemmte Gegenstand dann bspw. angehoben und die Stützvorrichtung mit dem Ausfahren darunter geschoben werden, alternativ oder zusätzlich lässt sich der eingeklemmte Gegenstand aber auch auf die Stützvorrichtung ziehen (in einem ortsfesten Koordinatensystem betrachtet, s. u. im Detail), während diese bspw. kontinuierlich ausgefahren wird. Unabhängig von der Verfahrensführung im Einzelnen kann mit dem Greifer vorteilhaft ein Gegenstand aufgenommen werden, insbesondere auch aus einem Regalfach. Je nach Regaltyp kann es an dessen Vorderseite, zu welcher hin der Gegenstand herausgenommen wird, bspw. einen Stopper geben, etwa in Form eines quer verlaufenden Balkens oder einer Leiste, woran der Gegenstand nach vorne ansteht. Mit dem Greifer lässt sich der Gegenstand dann z. B. vorne anheben und kann die Stützvorrichtung trotz des Stoppers unter den Gegenstand gebracht werden.

Die Kombination aus Klemmelementen und Stützvorrichtung kann aber auch unabhängig von einem solchen Stopper von Vorteil sein, bspw. wenn mehrere Gegenstände, insbesondere Kisten relativ nahe nebeneinanderstehen (im Folgenden wird der Begriff "Kiste" stellvertretend auch für Box und Kasten verwendet, bevorzugt ist jedenfalls eine im Wesentlichen quaderförmige Grundform, wobei der Behälter nach oben offen oder geschlossen sein kann). Mit den Klemmelementen lässt sich bei einer solchen Anordnung nebeneinander die gewünschte Kiste gut aus diesem Verband herausnehmen, die Klemmelemente können dazu z. B. in Breitenrichtung vergleichsweise dünn ausgeführt sein, siehe unten im Detail. Sie müssen den Gegenstand nämlich nur während des Aufnehmens klemmen und damit lagefixieren, anschließend wird er dann von der ausgefahrenen Stützvorrichtung getragen.

Vorteilhaft kann bspw. auch eine Anordnung der Klemmelemente an den in Breitenrichtung äußeren Enden des Verstellelements sein, sodass bspw. der jeweilige Relativabstand zwischen den Klemmelementen um z. B. nicht mehr als 10 %, 5 % oder 2 % kleiner als eine jeweilige Breite des Verstellelements ist, alternativ oder zusätzlich in absoluten Werten um z. B. nicht mehr als 20 cm, 10 cm bzw. 5 cm kleiner. Mit dieser Anordnung "außen" können bspw. auch am Rand, etwa an einer Wand oder anderen Einfassung stehende Gegenstände/Kisten gut angefahren werden, weil das Verstellelement nicht oder zumindest nicht wesentlich zur Seite übersteht.

Bevorzugt wird die Klemmung des Gegenstands nach dem Ausfahren der Stützvorrichtung, wenn der Gegenstand vertikal abgestützt auf dieser ruht, wieder gelöst, wird also der Relativabstand zwischen den Klemmelementen wieder vergrößert (sie können dann bspw. noch einem seitlichen Verrutschen des Gegenstands vorbeugen). Aufgrund dieser Arbeitsteilung lassen sich die Klemmelemente für das Herausnehmen/Anheben optimieren, sie können bspw. entsprechend dünn/filigran gestaltet werden, wohingegen die eigentliche Last dann im Anschluss von der Stützvorrichtung getragen wird.

Bevorzugte Ausgestaltungen der Erfindung finden sich in den abhängigen Ansprüchen. Wobei bei der Darstellung der Merkmale in dieser Offenbarung nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Wird bspw. ein für eine bestimmte Verfahrensweise geeignetes System oder ein entsprechender Greifer beschrieben, ist dies zugleich als Offenbarung eines entsprechenden Arbeitsverfahrens bzw. der entsprechenden Verwendung zu verstehen. Ebenso ist die Offenbarung einer bestimmten Verfahrensweise stets auch auf ein System zu lesen, das zur Durchführung der entsprechenden Verfahrensschritte eingerichtet ist.

Das "Eingerichtet-Sein" des Systems zur Durchführung bestimmter Verfahrensschritte kann bspw. meinen, dass in einer Steuereinheit des Systems entsprechende Befehle hinterlegt sein können. Bei Abarbeitung dieser Befehle kann dann die Steuereinheit den Greifer zur Durchführung der Verfahrensschritte veranlassen, sie kann also bspw. einen Antrieb des Verstellelements und/oder einen Antrieb der Stützvorrichtung entsprechend ansteuern. Die Steuereinheit kann dabei z. B. in einem Baustein, etwa einem Microcontroller oder einem ASIC, realisiert sein, sie kann aber auch dezentral in einer übergeordneten Rechnereinheit realisiert werden.

Der Greifer wird unter Verweis auf ein lokales orthogonales Koordinatensystem beschrieben, in dessen Breitenrichtung ist der Relativabstand zwischen den Klemmelementen mit dem lateralen Verstellelement veränderbar. Die Stützvorrichtung ist in einer zur Breitenrichtung senkrechten Tiefenrichtung ausfahrbar und stützt den Gegenstand dann vertikal ab, also in einer zur Breiten- und Tiefenrichtung senkrechten Vertikalrichtung (in dieser wirkt in der Anwendung die Gewichtskraft auf den Gegenstand, also im globalen Koordinatensystem betrachtet). Sofern generell von einem Verstellen oder einem Versatz in einer bestimmten Richtung die Rede ist, soll der entsprechende Verstell- oder Versatzweg zumindest eine überwiegende Richtungskomponente in dieser Richtung haben, also bspw. um nicht mehr als dem Betrag nach 30°, 20° bzw. 10° dazu verkippt sein, besonders bevorzugt parallel dazu liegen.

"Ein" und "eine" sind im Rahmen dieser Offenbarung ohne ausdrücklich gegenteilige Angabe als unbestimmte Artikel und damit immer auch als "mindestens ein" bzw. "mindestens eine" zu lesen. Der Greifer kann bspw. im Allgemeinen auch mehr als zwei Klemmelemente aufweisen, z. B. um bedarfsweise Gegenstände mit unterschiedlicher Form klemmen zu können. Unabhängig davon sind das erste und zweite Klemmelement bevorzugt derart angeordnet, dass beim Greifen einer Kiste diese in ihrer unteren Hälfte eingeklemmt wird (wenn der Greifer auf einem Höhenniveau platziert wird, sodass die Stützvorrichtung beim Ausfahren in Kontakt mit einer Unterseite der Kiste kommt).

Im Allgemeinen kann das laterale Verstellelement auf einer beliebigen Kinematik basieren, und dem Relativversatz der Klemmelemente in der Breitenrichtung kann zusätzlich auch eine andere Bewegungskomponente überlagert sein (z. B. eine Drehkomponente bei einer zangenartigen Schwenkbewegung). Bevorzugt ist der Versatz der Klemmelemente jedoch ausschließlich mit einer Richtungskomponente in der Breitenrichtung realisiert, werden die Klemmelemente also dabei in den anderen Richtungen nicht bewegt (im lokalen Bezugssystem des Greifers betrachtet). Das laterale Verstellelement kann bspw. als Linearführung bzw. -antrieb realisiert sein, z. B. mit einer oder mehreren jeweils in Breitenrichtung ausgerichteten Schienen (bspw. Käfigschienenführung).

Gemäß einer bevorzugten Ausführungsform weist das laterale Verstellelement zum Verstellen einen Scherenmechanismus auf, was bspw. hinsichtlich des Platzbedarfs im zusammengefahrenen Zustand (minimaler Relativabstand zwischen den Klemmelementen) von Vorteil sein kann, und z. B. auch hinsichtlich der bevorzugten Anordnung der Klemmelemente "außen", siehe vorne. Dies betrifft also zunächst die Baugröße in der Breitenrichtung, der Scherenmechanismus kann aber verglichen mit anderen Kinematiken bspw. auch in der Tiefenrichtung platzsparend sein, was z. B. hinsichtlich der Handhabung bzw. des Navigierens in Gängen zwischen Regalen von Vorteil sein kann. Generell kann mit dem Scherenmechanismus ein gewinkelt, insbesondere senkrecht zur Breitenrichtung liegender Verstellweg in einen Versatz in Breitenrichtung, insbesondere parallel dazu umgesetzt werden.

Prinzipiell lässt sich zwar auch mit einem "liegenden" Scherenmechanismus (Verstellweg weist in Tiefenrichtung) die gewünschte Verstellung erreichen; bevorzugt ist er jedoch "stehend" ausgeführt, hat der Verstellweg also eine überwiegende Richtungskomponente in der Vertikalrichtung, besonders bevorzugt liegt er parallel dazu. Die stehende Anordnung kann zum einen wegen des Bauraums von Vorteil sein, zum anderen kann der Scherenmechanismus den Gegenstand dann, wenn dieser im Anschluss an das Aufnehmen mit dem Greifer transportiert wird, zugleich in Tiefenrichtung abstützen, kann also bspw. die Kiste auf der Stützvorrichtung auf- und zugleich an dem Scherenmechanismus anliegen (bei leicht verkipptem Greifer). Je nach Aufhängung des Greifers kann die stehende Anordnung bspw. auch hinsichtlich der resultierenden Drehmomente von Vorteil sein.

Der Scherenmechanismus kann bspw. einen ersten und einen zweiten Hebel aufweisen, die gekreuzt angeordnet und im Kreuzungspunkt (z. B. im Wesentlichen mittig der Hebel) drehbar gelagert sind. Wird mit dem Scherenantrieb ein Abstand zwischen den antriebsseitigen Enden der Hebel vergrößert, wird der Abstand ihrer klemmkörperseitigen Enden vom Scherenantrieb verringert, kann also bspw. der Relativabstand zwischen den Klemmkörpern reduziert und der Gegenstand dazwischen eingeklemmt werden. Durch Verringerung des Abstands zwischen den antriebsseitigen Enden der Hebel wird hingegen der Abstand ihrer klemmkörperseitigen Enden vom Scherenantrieb vergrößert, kann also bspw. ein größerer Relativabstand zwischen den Klemmelementen eingestellt werden (vor dem Aufnehmen und/oder nach dem Ausfahren der Stützvorrichtung).

In bevorzugter Ausgestaltung weist der Scherenmechanismus ein erstes und ein zweites Hebelpaarsegment auf, wobei die Hebelpaarsegmente auf entgegengesetzten Seiten des Scherenantriebs angeordnet sind. Jedes Hebelpaarsegment kann einen ersten und einen zweiten Hebel aufweisen, vergleiche den vorstehenden Absatz im Detail. Prinzipiell kann der Scherenantrieb dabei für jedes Hebelpaarsegment auch eine gesonderte Antriebseinheit aufweisen, können die beiden also unabhängig voneinander verfahrbar sein (was z. B. Freiheiten in der Verfahrensführung eröffnen kann). Bevorzugt sind sie jedoch derselben Antriebseinheit zugeordnet (was z. B. Gewichtsvorteile bieten kann), werden also die Abstände zwischen den antriebsseitigen Enden der Hebelpaarsegmente simultan versetzt und dementsprechend die Klemmelemente simultan bewegt.

Gemäß einer bevorzugten Ausführungsform weist der Scherenmechanismus mindestens zwei Hebelpaarsegmente auf, die zwischen dem Scherenantrieb und einem der Klemmkörper angeordnet sind. Die mindestens zwei Hebelpaarsegmente können bspw. die Versatzweite in Breitenrichtung erweitern, also in Breitenrichtung nebeneinander angeordnet sein. Im Einzelnen kann bspw. zwischen dem ersten Hebelpaarsegment und dem ersten Klemmelement ein weiteres Hebelpaarsegment angeordnet sein ("drittes" in der Terminologie des Ausführungsbeispiels) und/oder kann zwischen dem zweiten Hebelpaarsegment und dem zweiten Klemmelement ein weiteres Hebelpaarsegment angeordnet sein ("viertes" im Ausführungsbeispiel). Dabei können zwischen dem Scherenantrieb und dem jeweiligen Klemmelement im Allgemeinen auch mehr als zwei Hebelpaarsegmente nebeneinander angeordnet sein, bevorzugt sind es jedoch genau zwei Hebelpaarsegmente, besonders bevorzugt auf jeder Seite des Scherenantriebs.

Generell kann zwischen den unmittelbar benachbarten Hebelpaarsegmenten bspw. eine Stabilisierungsstrebe angeordnet sein, welche den aneinandergesetzten Enden der Hebelpaarsegmente eine definierte Relativposition in Breitenrichtung vorgibt, gewinkelt dazu aber einen Versatz zulässt (bei der bevorzugten Ausrichtung parallel zur Vertikalrichtung). Dazu kann bspw. ein aneinandergesetztes Endenpaar der Hebelpaarsegmente mit einer an der Stabilisierungsstrebe in der Vertikalrichtung ortsfesten Drehachse drehbar gelagert sein, wohingegen das andere Endenpaar ebenfalls drehbar gelagert, dabei aber zusätzlich in einer Schiene geführt und damit die Drehachse entsprechend versetzbar ist (vorzugsweise in der Vertikalrichtung, siehe vorne).

Die Stützvorrichtung weist ein erstes und ein zweites Stützelement auf, wobei diese Stützelemente in der Tiefenrichtung ausfahrbar sind. Im Allgemeinen kann die Stützvorrichtung auch mehr als zwei ausfahrbare Stützelemente aufweisen, bspw. mindestens drei oder vier Stützelemente (mit möglichen Obergrenzen bei z. B. höchstens acht oder sechs Stützelementen), bevorzugt sind jedoch genau zwei Stützelemente. Die Stützelemente sind jedenfalls mit einer Richtungskomponente in Tiefenrichtung ausfahrbar, bevorzugt sind sie jeweils parallel zur Tiefenrichtung und damit parallel zueinander ausfahrbar. Auch mit Blick auf die bevorzugte Anwendung (Kisten/Regale) können die Stützelemente bspw. jeweils um mindestens 20 cm, 30 cm bzw. 40 cm ausfahrbar sein, mögliche Obergrenzen können bspw. bei höchstens 1,5 m bzw. 1 m liegen.

Zumindest eines der Stützelemente ist solchermaßen an dem lateralen Verstellelement angeordnet, dass ein in der Breitenrichtung als Mitte-zu-Mitte-Abstand genommener Stützelementabstand zwischen den Stützelementen veränderbar ist. Wird der Relativabstand zwischen den Klemmelementen bspw. vergrößert, nimmt dann damit auch der Stützelementabstand zu, wohingegen er abnimmt, wenn ein kleinerer Relativabstand eingestellt wird (der jeweilige Stützelementabstand ist aber bspw. stets kleiner als der jeweilige Relativabstand). Mit der Kopplung kann bspw. sichergestellt werden, dass der Stützelementabstand zur Breite des jeweilig aufgenommenen Gegenstands passt, also bspw. bei einer breiteren Kiste entsprechend größer ist. Dies schafft einerseits Stabilität und erlaubt andererseits eine effiziente Raumnutzung.

In bevorzugter Ausgestaltung ist der verstellbare Stützelementabstand mit dem Scherenmechanismus (siehe vorne) realisiert, bevorzugt ist das zumindest eine Stützelement zwischen den mindestens zwei Hebelpaarsegmenten angeordnet, die zwischen dem zumindest einen Klemmkörper und dem Scherenantrieb angeordnet sind. Das zumindest eine Verstellelement kann bspw. an einer vorstehend beschriebenen Stabilisierungsstrebe angeordnet sein, an welcher zugleich die Endenpaare der aneinandergesetzten Hebelpaarsegmente gelagert sind.

Bevorzugt sind sowohl das erste als auch das zweite Stützelement jeweils zwischen zwei benachbarten Hebelpaarsegmenten angeordnet, und zwar das erste Stützelement zwischen dem Scherenantrieb und dem ersten Klemmelement und das zweite Stützelement zwischen dem Scherenantrieb und dem zweiten Klemmelement. Wird dann der Relativabstand zwischen den Klemmelementen vergrößert, werden diese also vom Scherenantrieb weg bewegt, nimmt jeweils auch der Abstand des ersten und zweiten Klemmelements vom Scherenantrieb zu, und umgekehrt (Abstand des jeweiligen Stützelements vom Scherenantrieb nimmt mit dem Abstand des jeweiligen Klemmelements vom Scherenantrieb ab).

Gemäß einer bevorzugten Ausführungsform weist die Stützvorrichtung als Stützelement eine Gliederkette auf, deren Kettenglieder einseitig angeschlagen sind. Die nächstbenachbarten Kettenglieder sind also wie bei einer Kette an sich üblich jeweils drehbar miteinander verbunden, bspw. jeweils mit einem Bolzen, diese Drehbarkeit ist aber zu einer Seite hin gehemmt. In einem langgestreckten Zustand der Gliederkette können die einzelnen Drehachsen zwischen den Kettengliedern bspw. in einer gemeinsamen Ebene liegen, wobei sich die Kettenglieder dann zu einer Seite der Ebene hin zueinander falten lassen, jedoch aufgrund der einseitig angeschlagenen Ausführung nicht zur entgegengesetzten Seite hin.

Bevorzugt weist die Stützvorrichtung mindestens zwei jeweils als einseitig angeschlagene Gliederkette ausgeführte Stützelemente auf, besonders bevorzugt sind es genau zwei (bezüglich der möglichen Anzahl an Stützelementen wird auch auf die vorstehende Offenbarung verwiesen). Aufgrund des einseitigen Anschlags bildet bzw. bilden die Gliederkette(n) im ausgefahrenen Zustand eine Auflage für den Gegenstand, die Kette bzw. Ketten können nicht nach vertikal unten eingefaltet werden, sondern stützen den darauf angeordneten Gegenstand dann nach vertikal unten ab.

In bevorzugter Ausgestaltung ist auf einem Bolzen der Gliederkette, der zwei nächstbenachbarte Kettenglieder miteinander verbindet, eine Hülse angeordnet. Diese sitzt drehbar auf dem Bolzen, was das Aufnehmen des Gegenstands vereinfachen kann, über die drehbare Rolle bzw. Walze lässt er sich gut auf die Gliederkette ziehen bzw. kann die Gliederkette gut unter den Gegenstand geschoben werden. Bevorzugt sind mehrere Bolzen der Gliederkette jeweils mit einer drehbaren Hülse ausgestattet, besonders bevorzugt sämtliche Bolzen, findet sich also zwischen jedem Kettengliederpaar eine drehbare Hülse.

Gemäß einer bevorzugten Ausführungsform sind die Klemmelemente jeweils in der Tiefenrichtung größer als in der Breitenrichtung, bspw. um mindestens das 5-, 10-, 20- oder 30-Fache (theoretische Obergrenzen können bspw. bei dem 1.000- oder 500-Fachen liegen), wobei in der jeweiligen Richtung jeweils die größte Erstreckung betrachtet wird. Die Klemmelemente sind in Breitenrichtung flach ausgeführt, bspw. als in Tiefenrichtung ausgerichtete Stäbe oder plattenförmig, vorzugsweise jeweils als plane Platte. Bevorzugt ist ein jeweiliges plattenförmiges Klemmelement so angeordnet, dass seine Dickenrichtung, in welcher die Dicke der Platte genommen wird und diese ihre kleinste Erstreckung hat, zumindest eine Richtungskomponente in der Breitenrichtung hat, bevorzugt parallel dazu liegt. Mit einer solchen Form und Orientierung lassen sich die Klemmelemente auch in vergleichsweise kleine Lücken zwischen nebeneinander angeordneten Gegenständen, insbesondere in einem Regal nebeneinander angeordneten Kisten einbringen. Wie eingangs erwähnt, ist diese schlanke Ausgestaltung auch wegen der Arbeitsteilung möglich. Ein jeweilig plattenförmiges Klemmelement kann bspw. auch in Form einer Lochplatte, bzw. allgemein mit Durchlochungen beliebiger Form, vorgesehen sein, bspw. mit Blick auf einen insgesamt gewichtsoptimierten Aufbau.

Gemäß einer bevorzugten Ausführungsform ist das System mit dem Greifer als selbstfahrendes System mit einer mobilen Basis ausgeführt. Diese kann bspw. mit angetriebenen Rädern bzw. Rollen ausgestattet sein, bevorzugt ist sie für ein zweidimensionales Verfahren ausgelegt (in einer horizontalen Ebene frei bewegbar). Bezogen auf ihre Orientierung in der Anwendung kann die mobile Basis bspw. eine größte horizontale Erstreckung von höchstens 3 m, 2,5 m, 2 m, 1,5 m, 1,2 m, 1 m bzw. 0,9 m haben, mit möglichen (davon unabhängigen) Untergrenzen bei bspw. mindestens 0,5 m bzw. 0,6 m. Die gewichts- und insbesondere bauraumoptimierte Gestaltung des Greifers kann bspw. Hebel- bzw. Kippmomente reduzieren, weswegen umgekehrt eine vergleichsweise klein bemessene Basis Einsatz finden kann. Dies kann bspw. hinsichtlich des Verfahrens und Ausrichtens zwischen Regalen von Vorteil sein, also auch bei relativ engen Gängen einen Einsatz ermöglichen. Generell kann der Greifer den Effektor des Systems bilden, der über einen Roboterarm als Manipulator an einer Basis gelagert ist, insbesondere an der mobilen Basis (siehe vorne). Der Roboterarm kann im Allgemeinen bspw. auch mit einer oder mehreren Linearachsen ausgeführt sein, bevorzugt ist er als Mehrachs-Knickarmroboter vorgesehen (mit z. B. fünf, sechs oder auch sieben Achsen).

Die Erfindung betrifft auch ein Verfahren, das in den Ansprüchen 10-13 definiert wird, zum Aufnehmen eines Gegenstands mit einem Greifer, bezüglich dessen möglicher Ausgestaltungen ausdrücklich auf die vorstehende Offenbarung verwiesen wird. Bei dem entsprechenden Verfahren wird
i) der Relativabstand zwischen den Klemmelementen mit dem Verstellelement so verringert, dass der Gegenstand dazwischen eingeklemmt wird, und
ii) die Stützvorrichtung ausgefahren und damit unterhalb des Gegenstands angeordnet, also in anderen Worten der Gegenstand auf der Stützvorrichtung platziert.

Die Schritte i) und ii) können bspw. sequenziell erfolgen, und nach Schritt ii) trägt dann die Stützvorrichtung den Gegenstand. Nach dem Ausfahren der Stützvorrichtung können die Klemmelemente wieder gelöst werden, vergleiche auch die vorstehenden Anmerkungen. Nach dem Aufnehmen des Gegenstands, wenn dieser bspw. zu einer von der Aufnahmeposition verschiedenen Zielposition transportiert wird, bspw. durch Verfahren der mobilen Basis (siehe vorne), kann dann allein die Stützvorrichtung den Gegenstand tragen (dessen gesamte Last auf der Stützvorrichtung ruhen).

Bevorzugt ist der Gegenstand eine Kiste und/oder wird er aus einem Regal, also einem Regalfach herausgenommen. Bei dem Regal kann es sich insbesondere um ein Durchlaufregal handeln, welches von hinten befüllt und aus dem der Gegenstand bzw. die Kiste dann von vorne herausgenommen wird, bspw. um ein Schrägrollenregal. Unabhängig von diesen Details kann das Regalfach gegenüber dem Bodenniveau nach oben versetzt sein, sodass sich der Greifer gut mit der Stützvorrichtung auf einer vertikalen Höhe unter dem Gegenstand bzw. der Kiste platzieren lässt.

Gemäß einer bevorzugten Ausführungsform wird die Stützvorrichtung in Schritt ii) unter den zwischen den Klemmelementen eingeklemmten Gegenstand geschoben, wird sie also in einem ortsfesten Koordinatensystem betrachtet in einen Raum unterhalb des Gegenstands hinein ausgefahren, wozu Letzterer in seiner Klemmung durch die Klemmelemente angehoben wird (durch das Anheben wird der besagte Raum darunter zugänglich). Die Stützvorrichtung, insbesondere die Stützelemente (siehe vorne) werden mit dem Ausfahren unter den Gegenstand hineingedrückt. Die Stützvorrichtung kann insbesondere in das Regalfach hinein ausgefahren werden.

Alternativ oder zusätzlich kann der zwischen den Klemmelementen eingeklemmte Gegenstand aber auch aus dem Regalfach gezogen, kann er also im eingeklemmten Zustand in einem ortsfesten Koordinatensystem betrachtet aus dem Regalfach heraus und dabei auf die Stützvorrichtung gezogen werden, die dazu bspw. mit der Ziehbewegung ausgefahren werden kann. Die Stützvorrichtung bildet z. B. funktional eine Verlängerung des Regalfachs, darauf wird der eingeklemmte Gegenstand gezogen. Die Stützvorrichtung kann dabei auch vor dem Regalfach ausgefahren werden, während bspw. der Greifer insgesamt von dem Regalfach wegbewegt wird. Dies kann insbesondere so erfolgen, dass ein distales Ende der Stützvorrichtung, welches im ausgefahrenen Zustand den größten Abstand von dem lateralen Verstellelement hat, im ortsfesten Koordinatensystem betrachtet ruht, bspw. im Wesentlichen bündig vor dem Regalfach. Unabhängig von der Verfahrensführung im Einzelnen kann das Herausziehen bspw. auch mit Blick auf in ihrer vertikalen Höhe beschränkte Regalfächer von Vorteil sein, wenn also z. B. in dem Regalfach nicht hinreichend Platz zum Anheben und Darunterschieben besteht.

Es sind auch Kombinationen möglich, also ein kombiniertes Darunterschieben der Stützvorrichtung und Daraufziehen des Gegenstands, bspw. in unterschiedlichen Sequenzen des Aufnehmvorgangs oder auch tatsächlich simultan.

Die Erfindung betrifft auch die Verwendung, nach Anspruch 14, eines vorliegend offenbarten Systems zum Aufnehmen eines Gegenstands, vorzugsweise einer Kiste aus einem Regal.

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: den Greifer eines erfindungsgemäßen Systems in einer Vorderansicht;
- Figur 2: den Greifer gemäß Figur 1 in einer Seitenansicht, und zwar mit eingefahrener Stützvorrichtung;
- Figur 3: den Greifer in der Ansicht gemäß Figur 2 mit ausgefahrener Stützvorrichtung;
- Figur 4: ein selbstfahrendes System mit einer mobilen Basis und dem Greifer gemäß den Figuren 1-3 in schematischer Darstellung;
- Figur 5: das Aufnehmen einer Kiste aus einem Regalfach in schematischer Darstellung.

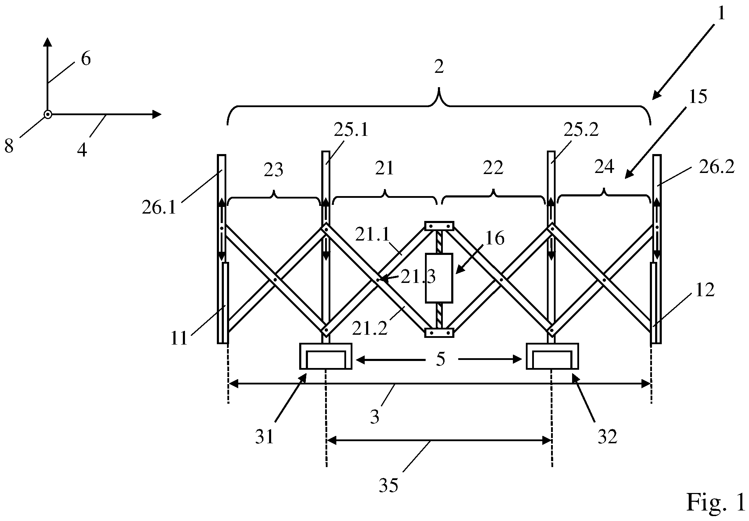

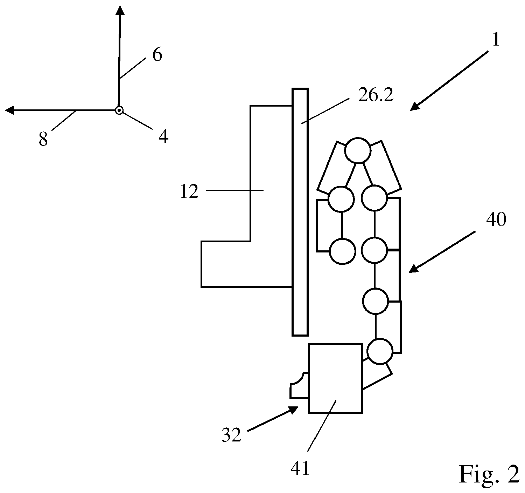

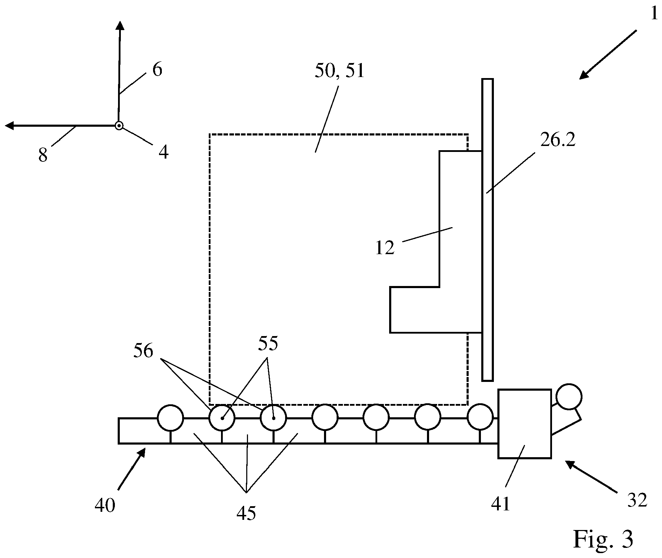

**Figur 1** zeigt einen Greifer 1 zum Aufnehmen eines Gegenstands, insbesondere einer Kiste (vergleiche Figur 3 im Detail). Der Greifer 1 weist ein laterales Verstellelement 2 auf, an dem ein erstes Klemmelement 11 und ein zweites Klemmelement 12 angeordnet sind. Mit dem lateralen Verstellelement 2 ist ein Relativabstand 3, der in einer Breitenrichtung 4 zwischen den Klemmelementen 11, 12 genommen wird, einstellbar. Wie nachstehend im Einzelnen erläutert, kann zwischen den Klemmelementen 11, 12 ein Gegenstand zum Aufnehmen eingeklemmt werden, der dann durch eine Stützvorrichtung 5 des Greifers 1 abgestützt wird (in einer Vertikalrichtung 6). Dazu ist die Stützvorrichtung 5 in einer Tiefenrichtung 8 ausfahrbar, also in Figur 1 aus der Zeichenebene heraus (vergleiche Figuren 2 und 3 im Detail).

Das laterale Verstellelement 2 weist einen Scherenmechanismus 15 auf, dieser setzt eine Verstellung in der Vertikalrichtung 6 in einen Versatz in der Breitenrichtung 4 um. Der Scherenmechanismus 15 umfasst vorliegend ein erstes und ein zweites Hebelpaarsegment 21, 22, die auf unterschiedlichen Seiten eines Scherenantriebs 16 angeordnet sind. Zwischen dem ersten Hebelpaarsegment 21 und dem ersten Klemmelement 11 ist ferner ein drittes Hebelpaarsegment 23 angeordnet, spiegelbildlich findet sich ein viertes Hebelpaarsegment 24. Jedes der Hebelpaarsegmente 21-24 weist einen ersten und einen zweiten Hebel 21.1, 21.2 auf, die jeweils in einer Mittenachse 21.3 miteinander verbunden sind (der Übersichtlichkeit halber exemplarisch nur für das erste Hebelsegment 21 mit Bezugszeichen referenziert).

Das erste und dritte Hebelpaarsegment 21, 23 sowie das zweite und vierte Hebelpaarsegment 22, 24 sind jeweils über eine Stabilisierungsstrebe 25.1, 25.2 miteinander verbunden, an der jeweils eine der Drehachsen in Vertikalrichtung 6 versetzbar und die andere bezogen auf die Vertikalrichtung 6 ortsfest gelagert ist. Die Stützvorrichtung 5 weist im Einzelnen ein erstes und ein zweites Stützelement 31, 32 auf, die jeweils an einer der Stabilisierungsstreben 25.1, 25.2 aufgehängt sind. Wird mit dem lateralen Verstellelement 2 der Relativabstand 3 verändert, verändert sich zugleich auch ein an den Stützelementen 31, 32 genommener Stützelementabstand 35.

**Figur 2** zeigt den Greifer 1 in einer Seitenansicht, bezogen auf Figur 1 von rechts darauf blickend. Das laterale Verstellelement 2 ist hierbei nicht weiter dargestellt, es ist davon lediglich eine zweite äußere Stabilisierungsstrebe 26.2 zu erkennen. An dieser ist das zweite Klemmelement 12 angeordnet, das an der ersten äußeren Stabilisierungsstrebe 26.1 angeordnete erste Klemmelement 11 liegt hinter der Zeichenebene. Die Seitenansicht lässt ferner das zweite Stützelement 32 erkennen, das mit einer einseitig angeschlagenen Gliederkette 40 realisiert ist. In einem hier nur schematisch gezeigten Gehäuse 41 ist ein in die Gliederkette eingreifender Antrieb untergebracht (nicht im Detail dargestellt), mit dem die Gliederkette 40 in der Tiefenrichtung 8 ausfahrbar ist.

**Figur 3** zeigt die Gliederkette 40 im ausgefahrenen Zustand, aufgrund des einseitigen Anschlags kippen die Kettenglieder 45 nicht nach unten weg. Stattdessen bilden sie ein Auflager und stützen den strichliert angedeuteten Gegenstand 50, bei dem es sich insbesondere um eine Kiste 51 handeln kann, vertikal ab. Auf die Kettenglieder 45 miteinander verbindenden Bolzen 55 ist ferner jeweils eine Hülse 56 drehbar gelagert, was das Ausfahren der Gliederkette 40 unter den Gegenstand 50 vereinfachen kann.

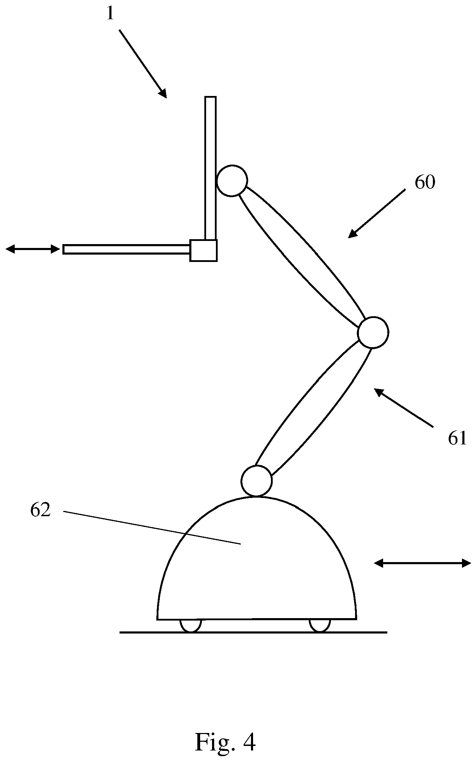

**Figur 4** zeigt ein System 60 mit einem Greifer 1 in einer schematischen Darstellung. Der Greifer 1 ist über einen Roboterarm 61 an einer mobilen Basis 62 gelagert, die ein selbstfahrendes System bildet.

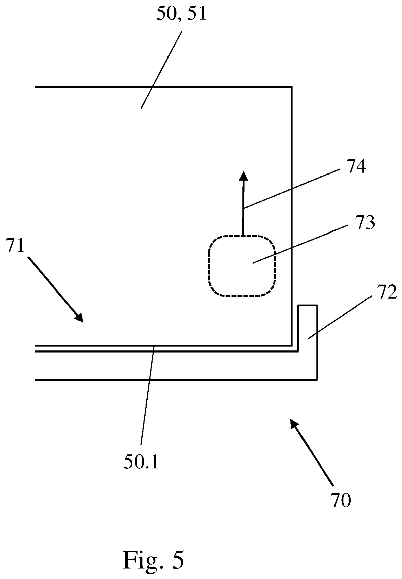

**Figur 5** illustriert das Aufnehmen des Gegenstands 50, insbesondere der Kiste 51, aus einem Regal 70, also das Herausnehmen aus einem Regalfach 71. Dieses wird nach vorne von einem Stopper 72 begrenzt, weswegen der Gegenstand 50 bzw. die Kiste 51 nicht einfach nach vorne herausgezogen werden kann. Mit den hier nicht dargestellten Klemmelementen wird der Gegenstand 50 deshalb beidseits jeweils in einem Bereich 73 geklemmt und dann angehoben 74. In Folge des Anhebens 74 ist eine Unterseite 50.1 des Gegenstands 50 zugänglich, kann also die Stützvorrichtung 5 unter den Gegenstand 50 geschoben bzw. dieser aus dem Regalfach 71 heraus auf die Stützvorrichtung 5 gezogen werden.

## Patentansprüche

1. System (60) mit einem Greifer (1) zum Aufnehmen eines Gegenstands (50), welcher Greifer (1)
ein laterales Verstellelement (2),
ein erstes und ein zweites Klemmelement (11, 12), und
eine Stützvorrichtung (5) aufweist,
wobei das erste und das zweite Klemmelement (11, 12) solcherma-ßen an dem lateralen Verstellelement (2) angeordnet sind, dass ihr in einer Breitenrichtung (4) genommener Relativabstand (3) mit dem lateralen Verstellelement (2) verstellbar ist,
und wobei die Stützvorrichtung (5) relativ zu den Klemmelementen (11, 12) ausfahrbar ist, und zwar in einer zur Breitenrichtung (4) senkrechten Tiefenrichtung (8),
welche Stützvorrichtung (5) ein erstes und ein zweites Stützelement (31, 32) aufweist, welche Stützelemente (31, 32) jeweils in der Tiefenrichtung (8) ausfahrbar sind,
wobei das System (60) dazu eingerichtet ist,
i) zum Einklemmen des Gegenstands (50) zwischen dem ersten und zweiten Klemmelement (11, 12) mit dem lateralen Verstellelement (2) den Relativabstand (3) zu verringern,
ii) zum vertikalen Abstützen des Gegenstands (50) die Stützvorrichtung (5) auszufahren und damit unterhalb des Gegenstands (50) anzuordnen,
**dadurch gekennzeichnet, dass** zumindest eines der Stützelemente (31, 32) solchermaßen an dem lateralen Verstellelement (2) angeordnet ist, dass mit dem Verstellen des lateralen Verstellelements (2) ein in der Breitenrichtung (4) genommener Stützelementabstand (35) zwischen den Stützelementen (31, 32) verstellbar ist.

2. System (60) nach Anspruch 1, bei welchem das laterale Verstellelement (2) einen Scherenmechanismus (15) aufweist.

3. System (60) nach Anspruch 2, bei welchem der Scherenmechanismus (15) ein erstes und ein zweites Hebelpaarsegment (21, 22) aufweist, welche Hebelpaarsegmente (21, 22) bezogen auf die Breitenrichtung (4) auf unterschiedlichen Seiten eines Scherenantriebs (16) angeordnet sind.

4. System (60) nach Anspruch 2 oder 3, bei welchem der Scherenmechanismus (15) zwischen einem der Klemmkörper (11, 12) und einem Scherenantrieb (16) mindestens zwei Hebelpaarsegmente (21, 23; 22, 44) aufweist.

5. System (60) nach Anspruch 4, bei welchem das zumindest eine Stützelement (31, 32) zwischen den mindestens zwei Hebelpaarsegmenten (21, 23; 22, 24) angeordnet ist.

6. System (60) nach einem der vorstehenden Ansprüche, bei welchem die Stützvorrichtung (5) eine Gliederkette (40) als Stützelement (31, 32) aufweist, deren Kettenglieder (45) solchermaßen einseitig angeschlagen sind, dass sie beim Ausfahren des Stützelements (31, 32) eine Auflage für den Gegenstand (50) bilden.

7. System (60) nach Anspruch 6, bei welchem auf Bolzen (55) der Gliederkette (40), welche jeweils die Kettenglieder (45) miteinander verbinden, jeweils eine Hülse (56) angeordnet ist, wobei die jeweilige Hülse (56) auf dem jeweiligen Bolzen (55) drehbar ist.

8. System (60) nach einem der vorstehenden Ansprüche, bei welchem die Klemmelemente (11, 12) jeweils plattenförmig mit einer flächigen Erstreckung in der Tiefenrichtung (8) ausgeführt sind.

9. System (60) nach einem der vorstehenden Ansprüche, welches als selbstfahrendes System mit einer mobilen Basis (62) ausgeführt ist.

10. Verfahren zum Aufnehmen eines Gegenstands (50) mit einem Greifer (1), welcher Greifer (1)
ein laterales Verstellelement (2),
ein erstes und ein zweites Klemmelement (11, 12), und
ein Stützelement (31, 32) aufweist,
wobei das erste und das zweite Klemmelement (11, 12) solcherma-ßen an dem lateralen Verstellelement (2) angeordnet sind, dass ihr in einer Breitenrichtung (4) genommener Relativabstand (3) mit dem lateralen Verstellelement (2) verstellbar ist,
und wobei die Stützvorrichtung (5) relativ zu den Klemmelementen (11, 12) ausfahrbar ist, und zwar in einer zur Breitenrichtung (4) senkrechten Tiefenrichtung (8),
welche Stützvorrichtung (5) ein erstes und ein zweites Stützelement (31, 32) aufweist, welche Stützelemente (31, 32) jeweils in der Tiefenrichtung (8) ausfahrbar sind,
bei welchem Verfahren
i) mit dem lateralen Verstellelement (2) der Relativabstand (3) zwischen dem ersten und zweiten Klemmelement (11, 12) verringert und damit der Gegenstand (50) zwischen den Klemmelementen (11, 12) eingeklemmt wird,
ii) die Stützvorrichtung (5) ausgefahren und der Gegenstand (50) auf der Stützvorrichtung (5) angeordnet wird,
**dadurch gekennzeichnet, dass** zumindest eines der Stützelemente (31, 32) solchermaßen an dem lateralen Verstellelement (2) angeordnet ist, dass mit dem Verstellen des lateralen Verstellelements (2) ein in der Breitenrichtung (4) genommener Stützelementabstand (35) zwischen den Stützelementen (31, 32) verstellt wird.

11. Verfahren nach Anspruch 10, bei welchem der Greifer (1) Teil eines Systems (60) nach einem der Ansprüche 1 bis 9 ist.

12. Verfahren nach Anspruch 10 oder 11, bei welchem der Gegenstand (50) aus einem Regalfach (71) aufgenommen wird, wobei der in Schritt i) eingeklemmte Gegenstand (50) angehoben und in Schritt ii) die Stützvorrichtung (5) unter den Gegenstand (50) geschoben wird.

13. Verfahren nach Anspruch 10 oder 11, bei welchem der Gegenstand (50) aus einem Regalfach aufgenommen wird, wobei der in Schritt i) eingeklemmte Gegenstand (50) in Schritt ii) aus dem Regalfach auf die Stützvorrichtung (5) gezogen wird.

14. Verwendung eines Systems (60) nach einem der Ansprüche 1 bis 9 zum Aufnehmen eines Gegenstands (50), vorzugsweise einer Kiste (51) aus einem Regal (70), insbesondere in einem Verfahren nach einem der Ansprüche 10 bis 13.

## Claims

1. System (60) with a gripper (1) for picking up an object (50), wherein the gripper (1) comprises
a lateral adjustment element (2),
a first and a second clamping element (11, 12), and
a support device (5),
wherein the first and second clamping elements (11, 12) are arranged at the lateral adjustment element (2) such that their relative distance (3) taken in a width direction (4) is adjustable with the lateral adjustment element (2),
and wherein the support device (5) is extendable relative to the clamping elements (11, 12), namely in a depth direction (8) being perpendicular to the width direction (4),
which support device (5) comprises a first and a second support element (31, 32), which support elements (31, 32) are each extendable in the depth direction (8),
wherein the system (60) is configured
i) for clamping the object (50) between the first and second clamping elements (11, 12) with the lateral adjustment element (2) to reduce the relative distance (3),
ii) to extend the support device (5) for vertically supporting the object (50) and thus to arrange it below the object (50),
**characterized in that** at least one of the support elements (31, 32) is arranged on the lateral adjustment element (2), such that with the adjustment of the lateral adjustment element (2), a support element distance (35) taken in the width direction (4) between the support elements (31, 32) is adjustable.

2. System (60) according to claim 1, wherein the lateral adjustment element (2) has a scissor mechanism (15).

3. System (60) according to claim 2, wherein the scissor mechanism (15) has a first and a second lever pair segment (21, 22), which lever pair segments (21, 22) are arranged on different sides of a scissor drive (16) with respect to the width direction (4).

4. System (60) according to claim 2 or 3, wherein the scissor mechanism (15) has at least two lever pair segments (21, 23; 22, 24) between one of the clamping elements (11, 12) and a scissor drive (16).

5. System (60) according to claim 4, wherein the at least one support element (31, 32) is arranged between the at least two lever pair segments (21, 23; 22, 24).

6. System (60) according to one of the preceding claims, wherein the support device (5) has a link chain (40) as support element (31, 32), the chain links (45) of which have a stop on one side such that the chain links (45) form a support for the object (50) when the support element (31, 32) is extended.

7. System (60) according to claim 6, wherein a respective sleeve (56) is arranged on pins (55) of the link chain (40), which respectively connect the chain links (45) to one another, the respective sleeve (56) being rotatable on the respective pin (55).

8. System (60) according to one of the preceding claims, wherein the clamping elements (11, 12) are each in the form of plates with a flat extension in the depth direction (8).

9. System (60) according to one of the preceding claims, the system (60) being designed as a self-propelled system with a mobile base (62).

10. Method for picking up an object (50) with a gripper (1), wherein the gripper (1) comprises
a lateral adjustment element (2),
a first and a second clamping element (11, 12), and
a support element (31, 32),
wherein the first and second clamping elements (11, 12) are arranged at the lateral adjustment element (2) such that their relative distance (3) taken in a width direction (4) is adjustable with the lateral adjustment element (2),
and wherein the support device (5) is extendable relative to the clamping elements (11, 12), namely in a depth direction (8) being perpendicular to the width direction (4),
which support device (5) comprises a first and a second support element (31, 32), which support elements (31, 32) are each extendable in the depth direction (8),
in which method
i) the relative distance (3) between the first and second clamping elements (11, 12) is reduced using the lateral adjustment element (2), thereby clamping the object (50) between the clamping elements (11, 12),
ii) the support device (5) is extended and the object (50) is arranged on the support device (5),
**characterized in that** at least one of the support elements (31, 32) is arranged on the lateral adjustment element (2), such that with the adjustment of the lateral adjustment element (2), a support element distance (35) taken in the width direction (4) between the support elements (31, 32) is adjusted.

11. Method according to claim 10, wherein the gripper (1) is part of a system (60) according to any one of claims 1 to 9.

12. Method according to claim 10 or 11, wherein the object (50) is picked up from a shelf compartment (71), wherein the object (50) clamped in step i) is lifted and in step ii) the support device (5) is pushed under the object (50).

13. Method according to claim 10 or 11, wherein the object (50) is picked up from a shelf compartment, wherein the object (50) clamped in step i) is pulled out of the shelf compartment onto the support device (5) in step ii).

14. Use of a system (60) according to any one of claims 1 to 9 for picking up an object (50), preferably a crate (51) from a shelf (70), in particular in a method according to any one of claims 10 to 13.

## Revendications

1. Système (60) doté d'un dispositif de préhension (1) pour saisir un objet (50), lequel dispositif de préhension (1) présente :
un élément de réglage latéral (2),
un premier et un deuxième élément de serrage (11, 12), et
un dispositif de support (5),
lesdits premier et deuxième éléments de serrage (11, 12) étant disposés sur l'élément de réglage latéral (2) de telle façon que leur distance relative (3), prise dans le sens de la largeur (4), est réglable grâce à l'élément de réglage latéral (2), et
ledit dispositif de support (5) pouvant être déployé par rapport aux éléments de serrage (11, 12), dans un sens de la profondeur (8) perpendiculaire au sens de la largeur (4),
ledit dispositif de support (5) présentant un premier et un deuxième élément de support (31, 32), lesquels éléments de support (31, 32) peuvent chacun être déployés dans le sens de la profondeur,
ledit système (60) étant conçu pour :
i) réduire la distance relative (3), grâce à l'élément de réglage latéral (2), afin de serrer l'objet (50) entre les premier et deuxième éléments de serrage (11, 12),
ii) déployer le dispositif de support (5) et ainsi le disposer en dessous de l'objet (50), afin de supporter verticalement ledit objet (50),
**caractérisé en ce qu'**au moins un des éléments de support (31, 32) est disposé sur l'élément de réglage latéral (2) de telle façon qu'une distance (35) séparant les éléments de support (31, 32) dans le sens de la largeur (4) est réglable sous l'effet d'un réglage de l'élément de réglage latéral (2).

2. Système (60) selon la revendication 1, dans lequel l'élément de réglage latéral (2) présente un mécanisme à ciseaux (15).

3. Système (60) selon la revendication 2, dans lequel le mécanisme à ciseaux (15) présente un premier et un deuxième segment de paire de leviers (21, 22), lesquels segments de paire de leviers (21, 22) sont disposés sur différents côtés d'un entraînement de mécanisme à ciseaux (16), par rapport au sens de la largeur (4).

4. Système (60) selon la revendication 2 ou 3, dans lequel le mécanisme à ciseaux (15) présente au moins deux segments de paire de leviers (21, 23 ; 22, 24) entre l'un des éléments de serrage (11, 12) et un entraînement de mécanisme à ciseaux (16).

5. Système (60) selon la revendication 4, dans lequel l'au moins un élément de support (31, 32) est disposé entre les au moins deux segments de paire de leviers (21, 23 ; 22, 24).

6. Système (60) selon l'une des revendications précédentes, dans lequel le dispositif de support (5) présente comme élément de support (31, 32) une chaîne à maillons (40) dont les maillons (45) sont en butée sur un côté de façon à former un plan de dépôt pour l'objet (50) lorsque l'élément de support (31, 32) est déployé.

7. Système (60) selon la revendication 6, dans lequel un manchon (56) est disposé sur des boulons (55) de la chaîne à maillons (40), qui relient chacun les maillons (45) entre eux, chacun des manchons (56) étant rotatif sur son boulon (55) respectif.

8. Système (60) selon l'une des revendications précédentes, dans lequel les éléments de serrage (11, 12) sont chacun en forme de plaque présentant une grande étendue dans le sens de la profondeur (8).

9. Système (60) selon l'une des revendications précédentes, conçu sous la forme d'un système automoteur doté d'une base mobile (62).

10. Procédé de saisie d'objet (50) à l'aide d'un dispositif de préhension (1), lequel dispositif de préhension (1) présente :
un élément de réglage latéral (2),
un premier et un deuxième élément de serrage (11, 12), et
un élément de support (31, 32) ;
lesdits premier et deuxième éléments de serrage (11, 12) étant disposés sur l'élément de réglage latéral (2) de telle façon que leur distance relative (3), prise dans le sens de la largeur (4), est réglable grâce à l'élément de réglage latéral (2), et
ledit dispositif de support (5) pouvant être déployé par rapport aux éléments de serrage (11, 12), dans un sens de la profondeur (8) perpendiculaire au sens de la largeur (4),
ledit dispositif de support (5) présentant un premier et un deuxième élément de support (31, 32), lesquels éléments de support (31, 32) peuvent chacun être déployés dans le sens de la profondeur,
dans le cadre duquel procédé :
i) la distance relative (3) entre les premier et deuxième éléments de serrage (11, 12) est réduite grâce à l'élément de réglage latéral (2), et l'objet (50) est ainsi serré entre lesdits premier et deuxième éléments de serrage (11, 12),
ii) le dispositif de support (5) est déployé et l'objet (50) est disposé sur
ledit dispositif de support (5),
**caractérisé en ce qu'**au moins un des éléments de support (31, 32) est disposé sur l'élément de réglage latéral (2) de telle façon qu'une distance (35) séparant les éléments de support (31, 32) dans le sens de la largeur (4) est réglée sous l'effet d'un réglage de l'élément de réglage latéral (2).

11. Procédé selon la revendication 10, dans lequel le dispositif de préhension (1) fait partie d'un système (60) selon l'une des revendications 1 à 9.

12. Procédé selon la revendication 10 ou 11, dans lequel l'objet (50) est saisi dans un compartiment de rayonnage (71), ledit objet (50) serré à l'étape i) étant soulevé et le dispositif de support (5) venant se glisser sous ledit objet (50) à l'étape ii).

13. Procédé selon la revendication 10 ou 11, dans lequel l'objet (50) est saisi dans un compartiment de rayonnage, ledit objet (50) serré à l'étape i) étant tiré du rayonnage et placé sur le dispositif de support (5) à l'étape ii).

14. Utilisation d'un système (60) selon l'une des revendications 1 à 9 pour saisir un objet (50), de préférence une caisse (51), sur un rayonnage (70), notamment dans le cadre d'un procédé selon l'une des revendications 10 à 13.
